# EUROPÄISCHE PATENTSCHRIFT

(11) **EP 2 295 960 B1**
(45) Veröffentlichungstag und Bekanntmachung des Hinweises auf die Patenterteilung: **22.08.2012**
(21) Anmeldenummer: 10174695.6
(22) Anmeldetag: 31.08.2010
(51) Int. Cl.: G01N 27/90, G01N 29/22, G01N 29/265, F16H 25/20, F22B 37/00, G01N 21/954

(54) **Abtastvorrichtung zum Abtasten eines Körpers, insbesondere eines Bolzens**
Apparatus for scanning a workpiece, in particular a bolt
Dispositif pour scanner un échantillon, en particulier un boulon

(30) Priorität: 15.09.2009 CH 14232009
(43) Veröffentlichungstag der Anmeldung: 16.03.2011
(73) Patentinhaber: Alstom Technology Ltd, 5400 Baden (CH)
(72) Erfinder: Wiesendanger, Markus, 8006 Zürich (CH)

(56) Entgegenhaltungen:
- EP-A1- 0 331 944
- EP-A2- 0 242 947
- JP-A- 2002 031 624
- US-A- 4 481 814

## Beschreibung

### TECHNISCHES GEBIET

Die vorliegende Erfindung bezieht sich auf das Gebiet der zerstörungsfreien Werkstückprüfung. Sie betrifft eine Abtastvorrichtung gemäss dem Oberbegriff des Anspruchs 1.

### STAND DER TECHNIK

In der Technik der thermischen Maschinen, insbesondere Dampf- oder Gasturbinen, werden häufig Bolzen zur Verschraubung von Turbinengehäusen verwendet, die eine in Längsrichtung verlaufende Bohrung aufweisen, um den Bolzen beispielsweise separat aufheizen zu können. Von dieser Bohrung können Risse ausgehen, welche die mechanische Festigkeit des unter starker Spannung stehenden Bolzens beeinträchtigen und zu schwerwiegenden Folgeerscheinungen führen können.

Es ist daher in der Vergangenheit bereits vorgeschlagen worden, derartige Bolzen optisch zu inspizieren, indem nach einer vorbereitenden Reinigung der Bohrung und Präparierung der Innenseite eine optische Sonde in die Bohrung eingeführt wird (US-B2-7,531,770). Eine derartige optische Inspektion ist jedoch mit erheblichem Zeitaufwand bei Vorbereitung und Durchführung verbunden, kann nicht ohne weiteres automatisiert werden und ist vergleichsweise unzuverlässig, weil nur die Oberfläche untersucht werden kann.

Es sind weiterhin auf dem Markt Vorrichtungen zur Inspektion derartiger Bohrungen mittels Ultraschall bekannt, die als "Stud Inspection Manipulator" (SIM) bezeichnet werden (Phoenix Inspection Systems Ltd., Warrington, UK). Bei diesen bekannten Vorrichtungen ist der Sensorkopf der Ultraschalleinrichtung am einen Ende eines Stabes befestigt, der am anderen Ende mit einer ersten Antriebseinheit verbunden ist, mittels derer der Stab um die Längsachse gesteuert gedreht werden kann. Die erste Antriebseinheit ist ihrerseits auf einem Schlitten montiert, der mittels einer zweiten steuerbaren Antriebseinheit auf einer Schiene in Längsrichtung des Stabes linear verfahren werden kann. Diese Vorrichtung erlaubt eine detaillierte, automatisierte und zuverlässige Untersuchung des Körpers, hat jedoch den Nachteil, dass sie wegen der vergleichsweise grossen Aussenabmessungen im Transport unhandlich ist und viel Platz auf der Eingasseite der Bohrung erfordert, sowie bezüglich des axialen Abtastbereiches durch die Länge der Schiene beschränkt ist.

Weiterhin offenbart die Druckschrift US-A-4,481,814 ein System zu Inspektion von Schraubbolzen, bei dem eine Sonde an einem Stab in eine zentrale Bohrung eingeführt und verschoben beziehungsweise um die Bohrungsachse gedreht wird. Für die Längsbewegung ist ausschließlich ein erster motorischer Antrieb zuständig, während für die Drehbewegung ausschließlich ein zweiter motorischer Antrieb vorgesehen ist. Nachteilig ist dabei eine sehr komplizierte Ausgestaltung des Stabes notwendig.

Die Druckschrift EP-A2-0 242 947 zeigt ein Inspektionssystem für das Sammelrohr eines Dampfkessels, bei dem eine Sensoranordnung an einem Stab in

Längsrichtung und um die Achse gedreht durch das Rohr bewegt wird. Auch hier werden die Längsbewegung und die Drehbewegung durch separate Antriebe verwirklicht. Darüber hinaus kann der Stab nicht beliebig durch die Antriebseinheit geschoben werden, sondern ist mit einem Ende fest an einem Schlitten angebracht.

Das in der Ausführung aufwändige Prinzip der getrennten Antriebe für die Längsbewegung und die Drehbewegung ist auch beim Antriebsmechanismus der Druckschrift EP-A1-0 331 944 eingesetzt, ebenso wie bei der Vorrichtung der Druckschrift JP2002031624.

Neben der wünschenswerten Flexibilität im Einsatz fehlt es den bekannten Lösungen insbesondere an Einfachheit und Robustheit.

### DARSTELLUNG DER ERFINDUNG

Es ist daher Aufgabe der Erfindung, eine Abtastvorrichtung der eingangs genannten Art anzugeben, welche die geschilderten Nachteile bekannter Vorrichtungen überwindet und sich durch einen kompakten Aufbau, einen automatisierbaren Betrieb und eine grosse Flexibilität im Einsatz auszeichnet.

Die Aufgabe wird durch die Gesamtheit der Merkmale des Anspruchs 1 gelöst. Wichtig für die erfindungsgemässe Lösung ist, dass zum Verschieben und Drehen des Stabes eine kompakte steuerbare Antriebseinheit vorgesehen ist, durch welche hindurch sich der Stab erstreckt, und welche den Stab je nach Ansteuerung längs verschiebt und/oder dreht. Die für beide Bewegungsarten (Drehung und Linearverschiebung) des Stabes zuständige (kombinierte) Antriebseinheit ermöglicht den Verzicht auf schwere und sperrige Schlitten und Linearführungen. Da sich der Stab durch die Antriebseinheit hindurch erstreckt, kann der Abtastbereich ohne spezielle Massnahmen flexibel gestaltet werden.

Die erfindungsgemässe Antriebseinheit zeichnet sich weiterhin dadurch aus, dass sie einen ersten Schraubentrieb umfasst, der bei einer Drehung um die Zylinderachse des Stabes in einer ersten Drehrichtung den Stab in eine erste Richtung längs verschiebt und bei einer Drehung um die Zylinderachse des Stabes in einer zweiten, entgegengesetzten Drehrichtung den Stab in eine zweite, entgegengesetzte Richtung längs verschiebt, dass die Antriebseinheit einen zweiten Schraubentrieb umfasst, der bei einer Drehung um die Zylinderachse des Stabes in der ersten Drehrichtung den Stab in die zweite Richtung längs verschiebt und bei einer Drehung um die Zylinderachse des Stabes in der zweiten Drehrichtung den Stab in die erste Richtung längs verschiebt, und dass die beiden Schraubentriebe an eine gemeinsame Steuerung angeschlossen sind.

Eine Ausgestaltung ist dadurch gekennzeichnet, dass die Schraubentriebe jeweils einen den Stab konzentrisch umschliessenden Lagerring aufweisen, welcher in einem gemeinsamen Gehäuse um die Zylinderachse drehbar gelagert ist, und dass in jedem der Lagerringe eine Mehrzahl von Reibrollen um den Stab herum gleichmässig verteilt nach Art von Planetenrädern derart drehbar gelagert sind, dass sie mit Reibschluss auf der Aussenfläche des Stabes abrollen, dass die Drehachsen der Reibrollen eines Lagerrings jeweils um denselben Winkel gegenüber der Zylinderachse verkippt sind, und dass die Drehachsen der Reibrollen der beiden Lagerringe entweder in die gleiche oder in die entgegengesetzte Richtung verkippt sind.

Vorzugsweise ist der Stab, beispielsweise durch Gleitlager, in dem Gehäuse in axialer Richtung geführt.

Eine andere Ausgestaltung zeichnet sich dadurch aus, dass am Gehäuse Mittel zum Befestigen der Abtastvorrichtung am Körper bzw. Bolzen vorgesehen sind.

Vorzugsweise umfassen die Befestigungsmittel einen an den Körper bzw. Bolzen angepassten Flansch.

Gemäss einer weiteren Ausgestaltung weist jeder der Schraubentriebe einen eigenen, steuerbaren Antrieb auf.

Eine andere Ausgestaltung ist **dadurch gekennzeichnet, dass** die Sonde zur zerstörungsfreien Prüfung des Körpers bzw. Bolzens mittels Ultraschall ausgelegt und an eine entsprechende Messeinheit angeschlossen ist. Andere Untersuchungsmethoden, wie z.B. Wirbelstrommessungen, sind ebenfalls denkbar.

Besonders einfach und stabil im Aufbau ist die Abtastvorrichtung, wenn gemäss einer anderen Ausgestaltung die Sonde unmittelbar am einen Ende des Stabes befestigt ist.

Um bei einem Reibschluss zwischen Schraubentrieben und Stab einen auftretenden Schlupf erkennen und berücksichtigen zu können, ist es von Vorteil, wenn gemäss einer weiteren Ausgestaltung Mittel zur Bestimmung der Position des Stabes relativ zur Antriebseinheit vorgesehen sind. Hierbei können die Dreh- und Linearbewegungen des Stabes beispielsweise nach Art einer optischen Maus aufgenommen und ausgewertet werden.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: ein Beispiel für eine Abtastsituation, für welche die Abtastvorrichtung nach der Erfindung eingesetzt werden kann;
- Fig. 2: ein Ausführungsbeispiel einer Abtastvorrichtung nach der Erfindung beim Einsatz in der Abtastsituation nach Fig. 1 und
- Fig. 3: die Draufsicht in axialer Richtung auf eine beispielhafte Anordnung der Reibrollen in einem der Schraubentriebe aus Fig. 2.

### WEGE ZUR AUSFÜHRUNG DER ERFINDUNG

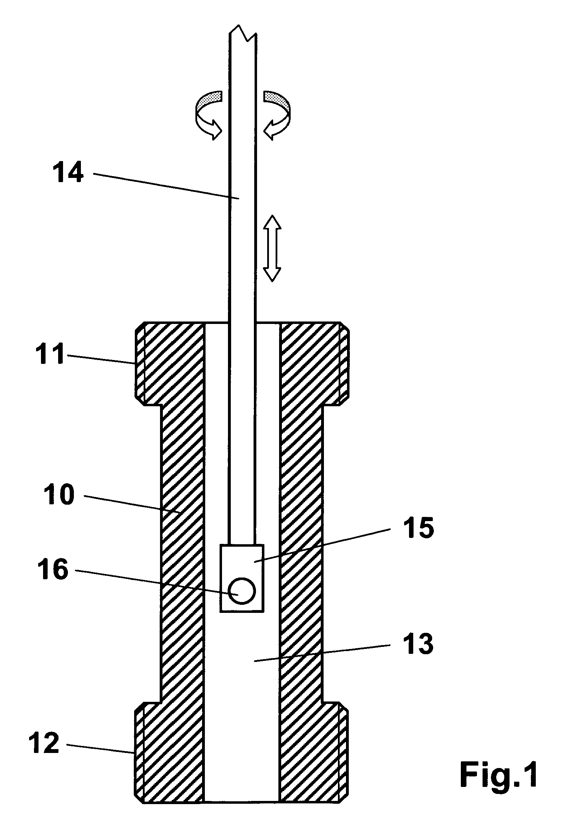

Fig. 1 zeigt ein Beispiel für eine Abtastsituation, für welche die Abtastvorrichtung nach der Erfindung eingesetzt werden kann. Untersucht werden soll hier ein Bolzen 10, der zur Verschraubung eines Turbinengehäuses dient und dazu an den Enden mit zwei Aussengewinden 11 und 12 versehen ist. Durch den Bolzen hindurch erstreckt sich eine Bohrung 13, die beispielsweise dazu benutzt werden kann, den Bolzen 10 zur thermischen Anpassung an die Turbine von innen aufzuheizen. Es versteht sich von selbst, dass auch andere Abtastsituationen denkbar sind, in denen von einer Bohrung oder einem Kanal in einem Körper heraus der Körper auf Schäden hin untersucht wird.

In die Bohrung 13 des Bolzens 10 wird zur Untersuchung des Bolzens 10 eine an einem Stab 14 befestigte Sonde 15 eingeschoben, die beispielsweise als Ultraschallsonde ausgebildet ist und durch eine Öffnung 16 in eine bestimmte Richtung senkrecht zur Stabachse Ultraschallsignale aussendet und empfängt. Andere Arten der zerstörungsfreien Prüfung sind aber auch denkbar.

Die gesamte Innenseite der Bohrung 13 kann dadurch abgetastet werden, dass die Sonde 15 am Stab 14 in Längsrichtung des Stabes verschoben und/oder um die Stabachse in einem Winkelbereich von wenigstens 360 ° gedreht wird (siehe Pfeile in Fig. 1). Für diese kombinierte Linear- und Drehbewegung stellt die Erfindung nun eine kompakte und im Einsatz flexible Antriebslösung zur Verfügung, die es ermöglicht, die Abtastvorrichtung leicht an einen vom Platz her beschränkten Einsatzort zu transportieren und dort in den unterschiedlichsten Konfigurationen ohne grossen Aufwand einzusetzen.

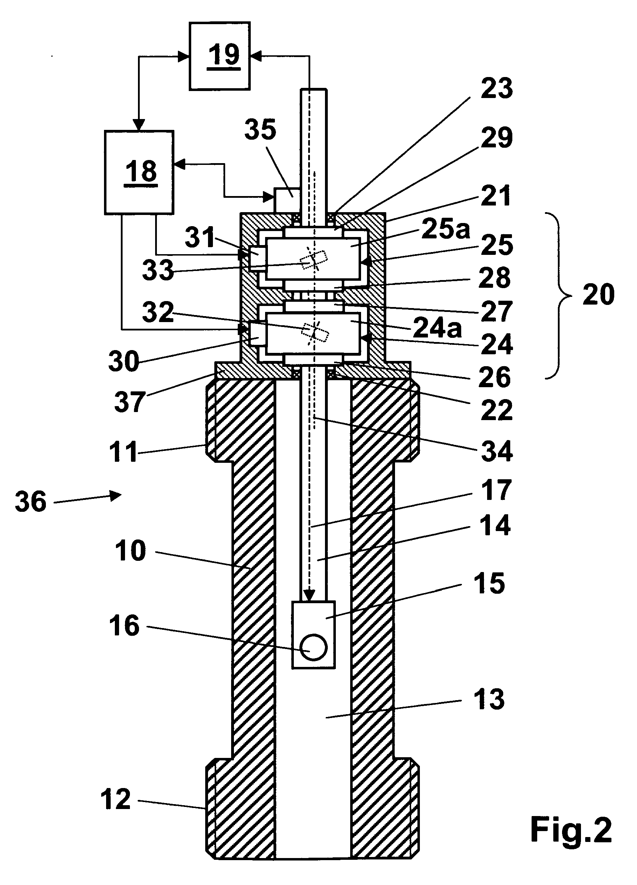

Fig. 2 zeigt (im teilweisen Längsschnitt) ein Ausführungsbeispiel der erfindungsgemässen Abtastvorrichtung beim Einsatz an einem Bolzen, wie er in Fig. 1 bereits gezeigt worden ist. Die Abtastvorrichtung 36 der Fig. 2 umfasst die am vorderen Ende des zylindrischen Stabes 14 befestigte Sonde 15 sowie eine kompakte Antriebseinheit 20, die mittels eines dafür vorgesehenen Flansches 37 (z.B. mit einer in Fig. 2 nicht gezeigten Überwurfmutter) an dem zu untersuchenden Bolzen 10 lösbar befestigt werden kann.

Die Antriebseinheit 20, durch die sich der Stab 14 mitten hindurch erstreckt, ist in einem Gehäuse 21 untergebracht. Der hindurchgehende Stab 14 ist an einer oberen und unteren Öffnung im Gehäuse 21 mittels entsprechender Gleitlager 22 und 23 drehbar und linear verschiebbar gelagert. Im Gehäuse 21 sind in axialer Richtung (Achse 34) hintereinander zwei Schraubentriebe 24 und 25 untergebracht, die aufgrund ihrer Ausgestaltung eine Drehbewegung um die Achse 34 in eine Linearbewegung des Stabes 14 in Richtung der Achse 34 umwandeln, wobei einer Umkehr der Drehbewegung auch eine Umkehr in der Linearbewegung zur Folge hat.

Beide Schraubentriebe 24 und 25 arbeiten gegenläufig, d.h. bei gleicher Drehrichtung bewegen sie den Stab 14 auf gleiche Weise, aber in entgegengesetzte axiale Richtungen, während sie bei gegenläufigen Drehrichtungen den Stab 14 in derselben axialen Richtung verschieben. Hierbei sind verschiedene Situationen zu unterscheiden (wenn man der Einfachheit halber bei beiden Schraubentrieben dieselbe Steigung voraussetzt):
- Wenn die Drehrichtung und die Drehgeschwindigkeit beider Schraubentriebe 24, 25 gleich ist, heben sich die axialen Linearbewegungen des Stabes 14 auf und der Stab 14 dreht sich mit derselben Drehgeschwindigkeit um seine Achse.
- Wenn die Drehrichtung beider Schraubentriebe 24, 25 gleich ist, sich die Drehgeschwindigkeiten jedoch unterscheiden, überlagert sich beim Stab 14 der Drehbewegung eine axiale Linearbewegung, deren Richtung durch den Schraubentrieb mit der höheren Drehgeschwindigkeit vorgegeben wird.
- Wenn die Drehrichtung beider Schraubentriebe 24, 25 entgegengesetzt und die Drehgeschwindigkeit gleich ist, bewegt sich der Stab 14 mit maximaler Geschwindigkeit ausschliesslich in axialer Richtung, ohne eine Drehbewegung auszuführen.
- Wenn die Drehrichtung beider Schraubentriebe 24, 25 entgegengesetzt und die Drehgeschwindigkeit unterschiedlich ist, bewegt sich der Stab 14 in axialer Richtung und führt eine Drehbewegung aus, deren Richtung und Geschwindigkeit davon abhängt, welcher der beiden Schraubentriebe 24, 25 die höhere Drehgeschwindigkeit hat.

Durch Einzelansteuerung der beiden Schraubentriebe 24, 25 kann so eine beliebige Kombination aus Linear- und Drehbewegung des Stabes 14 erzeugt werden, mit der man jeden Punkt auf der Innenseite der Bohrung 13 mit der Sonde 15 anfahren kann.

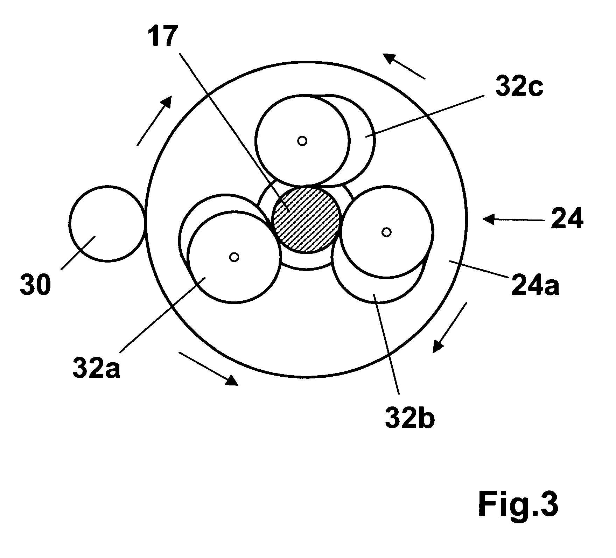

Eine einfache Art von Schraubentrieb kann durch einen im Gehäuse 21 mittels Kugellagern 26, 27 und 28, 29 drehbar gelagerten, motorisch antreibbaren Lagerring 24a bzw. 25a verwirklicht werden, der den Stab 14 konzentrisch und mit Abstand umschliesst, und in dem mit gekippter Achse über den Umfang verteilt Reibrollen 32, 33 (in Fig. 2) bzw. 32a-c (in Fig. 3) drehbar gelagert sind, die durch Reibschluss auf der Aussenfläche des Stabes 14 abrollen, wenn der zugehörige Lagerring sich dreht. Gemäss Fig. 3 sind pro Schraubentrieb 24, 25 drei Reibrollen 32a-c jeweils um 120 ° versetzt im Lagerring angeordnet. Für den Drehantrieb des Lagerrings kann beispielsweise ein Antriebsmotor 30 bzw. 31 vorgesehen sein, der (beispielsweise als Servomotor) von einer Steuerung 18 gesteuert wird. Die Gegenläufigkeit der Schraubentriebe 24, 25 wird dadurch erreicht, dass die Achsen der Reibrollen 32, 33 (wie in Fig. 2 mit punktierten Linien angedeutet) in entgegengesetzte Richtungen aus der Achse 34 heraus verkippt sind. Die Genauigkeit der Positionierung der Sonde 15 steigt dabei mit abnehmendem Kippwinkel der Achsen.

Die Sonde 15 ist über eine Messleitung 17 an eine Messeinheit 19 angeschlossen. Die Messleitung 17 wird dabei zweckmässigerweise durch das Innere des Stabes 14 zur Sonde 15 geführt. Messeinheit 19 und Steuerung 18 können untereinander verbunden sein, um den Messpunkten Koordinaten zuordnen zu können. Da wegen der Reibrollen ein Schlupf zwischen Schraubentrieb und Stab auftreten kann, ist es von Vorteil, am Stab 14 einen Wegaufnehmer 35 anzuordnen, der - beispielsweise nach Art einer optischen Maus - die Linear- und Drehbewegung des Stabes 14 aufnimmt und zur Steuerung 18 leitet.

Die Sonde 15 kann am Stabende lösbar befestigt sein, um bei sich ändernden Bohrungsdurchmessern andere Sondengrössen einsetzen zu können.
Desgleichen kann der Stab 14 in der Länge verändert werden, um Bohrungen mit grösserer axialer Länge abtasten zu können. Die Antriebseinheit 20 braucht dabei aufgrund ihres Aufbaus und ihrer Wirkungsweise nicht verändert zu werden. Auch ist es denkbar, anstelle eines starren Stabes einen mehr oder weniger stark biegsamen, flexiblen Stab zu verwenden, um Körper mit gekrümmten Kanälen abtasten zu können.

Insgesamt zeichnet sich die erfindungsgemässe Abtastvorrichtung durch folgende Eigenschaften und Vorteile aus:
- Leichte und kompakte Bauweise.
- Keine bewegten Antriebsmotoren.
- Grosse Stablängen ohne Änderung der Antriebseinheit möglich.
- Einsatz von flexiblen Stäben möglich.

### BEZUGSZEICHENLISTE

- 10: Bolzen
- 11,12: Aussengewinde
- 13: Bohrung
- 14: Stab
- 15: Sonde (z.B. Ultraschall)
- 16: Öffnung
- 17: Messleitung
- 18: Steuerung
- 19: Messeinheit
- 20: Antriebseinheit
- 21: Gehäuse
- 22,23: Gleitlager
- 24,25: Schraubentrieb
- 24a,25a: Lagerring
- 26,..,29: Kugellager
- 30,31: Antriebsmotor
- 32,33: Reibrolle
- 32a-c: Reibrolle
- 34: Achse (Zylinderachse)
- 35: Wegaufnehmer
- 36: Abtastvorrichtung
- 37: Flansch

## Patentansprüche

1. Abtastvorrichtung (36) zum Abtasten eines Körpers, insbesondere eines Bolzens (10), von einer sich durch den Körper bzw. Bolzen (10) erstreckenden, von aussen zugänglichen Bohrung (13) aus, welche Abtastvorrichtung (36) eine an einem zylindrischen Stab (14) befestigte, zum Abtasten des Körpers bzw. Bolzens (10) in die Bohrung (13) einführbare Sonde (15) umfasst, welche durch Verschiebung des Stabes (14) in seiner Längsrichtung in der Bohrung (13) axial verschiebbar und durch Drehen des Stabes (14) um seine Zylinderachse (34) um die Bohrungsachse drehbar ist, wobei zum Verschieben und Drehen des Stabes (14) eine kompakte steuerbare Antriebseinheit (20) vorgesehen ist, durch welche hindurch sich der Stab (14) erstreckt, und welche den Stab (14) je nach Ansteuerung längs verschiebt und/oder dreht, **dadurch gekennzeichnet, dass** die Antriebseinheit (20) einen ersten Schraubentrieb (24) umfasst, der bei einer Drehung um die Zylinderachse (34) des Stabes (14) in einer ersten Drehrichtung den Stab (14) in eine erste Richtung längs verschiebt und bei einer Drehung um die Zylinderachse (34) des Stabes (14) in einer zweiten, entgegengesetzten Drehrichtung den Stab (14) in eine zweite, entgegengesetzte Richtung längs verschiebt, dass die Antriebseinheit (20) einen zweiten Schraubentrieb (25) umfasst, der bei einer Drehung um die Zylinderachse (34) des Stabes (14) in der ersten Drehrichtung den Stab (14) in die zweite Richtung längs verschiebt und bei einer Drehung um die Zylinderachse (34) des Stabes (14) in der zweiten Drehrichtung den Stab (14) in die erste Richtung längs verschiebt, und dass die beiden Schraubentriebe (24, 25) an eine gemeinsame Steuerung (18) angeschlossen sind.

2. Abtastvorrichtung nach Anspruch 1, **dadurch gekennzeichnet, dass** die Schraubentriebe (24, 25) jeweils einen den Stab (14) konzentrisch umschliessenden Lagerring (24a, 25a) aufweisen, welcher in einem gemeinsamen Gehäuse (21) um die Zylinderachse (34) drehbar gelagert ist, und dass in jedem der Lagerringe (24a, 25a) eine Mehrzahl von Reibrollen (32, 33; 32a-c) um den Stab (14) herum gleichmässig verteilt nach Art von Planetenrädern derart drehbar gelagert sind, dass sie mit Reibschluss auf der Aussenfläche des Stabes (14) abrollen, dass die Drehachsen der Reibrollen eines Lagerrings jeweils um denselben Winkel gegenüber der Zylinderachse (34) verkippt sind, und dass die Drehachsen der Reibrollen der beiden Lagerringe (24a, 25a) entweder in die gleiche oder in die entgegengesetzte Richtung verkippt sind.

3. Abtastvorrichtung nach Anspruch 2, **dadurch gekennzeichnet, dass** der Stab (14) in dem Gehäuse (21) in axialer Richtung geführt ist

4. Abtastvorrichtung nach Anspruch 3, **dadurch gekennzeichnet, dass** am Gehäuse (21) Mittel (37) zum Befestigen der Abtastvorrichtung (36) am zu untersuchenden Körper bzw. Bolzen (10) vorgesehen sind.

5. Abtastvorrichtung nach Anspruch 4, **dadurch gekennzeichnet, dass** die Befestigungsmittel einen an den Körper bzw. Bolzen (10) angepassten Flansch (37) umfassen.

6. Abtastvorrichtung nach einem der Ansprüche 1 bis 5, **dadurch gekennzeichnet, dass** jeder der Schraubentriebe (24, 25) einen eigenen, steuerbaren Antrieb (30, 31) aufweist.

7. Abtastvorrichtung nach einem der Ansprüche 1 bis 6, **dadurch gekennzeichnet, dass** die Sonde (15) zur zerstörungsfreien Prüfung des Körpers bzw. Bolzens (10) mittels Ultraschall ausgelegt und an eine entsprechende Messeinheit (19) angeschlossen ist.

8. Abtastvorrichtung nach einem der Ansprüche 1 bis 7, **dadurch gekennzeichnet, dass** die Sonde (15) unmittelbar am einen Ende des Stabes (14) befestigt ist.

9. Abtastvorrichtung nach einem der Ansprüche 1 bis 8, **dadurch gekennzeichnet, dass** Mittel (35) zur Bestimmung der Position des Stabes (14) relativ zur Antriebseinheit (20) vorgesehen sind.

## Claims

1. Scanning device (36) for scanning a body, especially a bolt (10), from a bore (13) which extends through the body or bolt (10) and is accessible from the outside, which scanning device (36) comprises a probe (15) which is fastened on a cylindrical rod (14) and can be inserted into the bore (13) for scanning the body or bolt (10), which probe, by displacing the rod (14) in its longitudinal direction, is axially displaceable in the bore (13), and by rotating the rod (14) around its cylinder axis (34) is rotatable around the bore axis, wherein for displacing and rotating the rod (14) provision is made for a compact, controllable drive unit (20) through which the rod (14) extends and which longitudinally displaces and/or rotates the rod (14) depending upon selection, **characterized in that** the drive unit (20) comprises a first screw drive (24) which during a rotation around the cylinder axis (34) of the rod (14) in a first rotational direction longitudinally displaces the rod (14) in a first direction, and during a rotation around the cylinder axis (34) of the rod (14) in an opposite, second rotational direction longitudinally displaces the rod (14) in an opposite, second direction, **in that** the drive unit (20) comprises a second screw drive (25) which during a rotation around the cylinder axis (34) of the rod (14) in the first rotational direction longitudinally displaces the rod (14) in the second direction, and during a rotation around the cylinder axis (34) of the rod (14) in the second rotational direction longitudinally displaces the rod (14) in the first direction, and **in that** the two screw drives (24, 25) are connected to a common control unit (18).

2. Scanning device according to Claim 1, **characterized in that** the screw drives (24, 25) have a bearing ring (24a, 25a) in each case which concentrically encompasses the rod (14) and is rotatably mounted around the cylinder axis (34) in a common housing (21), and **in that** in each of the bearing rings (24a, 25a) a multiplicity of friction rollers (32, 33; 32a - c) are rotatably mounted around the rod (14) in a uniformly distributed manner in the style of planetary gearwheels in such a way that they roll on the external surface of the rod (14) with frictional engagement, **in that** the rotational axes of the friction rollers of a bearing ring are tilted in each case by the same angle in relation to the cylinder axis (34), and **in that** the rotational axes of the friction rollers of the two bearing rings (24a, 25a) are tilted either in the same direction or in the opposite direction.

3. Scanning device according to Claim 2, **characterized in that** the rod (14) is guided in the housing (21) in the axial direction.

4. Scanning device according to Claim 3, **characterized in that** means (37) are provided on the housing (21) for fastening the scanning device (36) on the body or bolt (10) which is to be inspected.

5. Scanning device according to claim 4, **characterized in that** the fastening means comprise a flange (37) which is adapted to the body or bolt (10).

6. Scanning device according to one of Claims 1 to 5, **characterized in that** each of the screw drives (24, 25) has a separate, controllable drive (30, 31).

7. Scanning device according to one of Claims 1 to 6, **characterized in that** the probe (15) is designed for non-destructive testing of the body or bolt (10) by means of ultrasound and is connected to a corresponding measuring unit (19).

8. Scanning device according to one of Claims 1 to 7, **characterized in that** the probe (15) is fastened directly on one end of the rod (14).

9. Scanning device according to one of Claims 1 to 8, **characterized in that** means (35) are provided for determining the position of the rod (14) relative to the drive unit (20).

## Revendications

1. Dispositif de balayage (36) pour scanner un corps, en particulier un boulon (10), depuis un alésage (13) accessible de l'extérieur, s'étendant à travers le corps ou le boulon (10), lequel dispositif de balayage (36) comprend une sonde (15) fixée à une barre cylindrique (14), pouvant être introduite dans l'alésage (13) pour scanner le corps ou le boulon (10), laquelle sonde peut être déplacée axialement par déplacement de la barre (14) dans sa direction longitudinale dans l'alésage (13) et peut tourner autour de l'axe de l'alésage par rotation de la barre (14) autour de son axe de cylindre (34), une unité d'entraînement compacte commandable (20) étant prévue pour le déplacement et la rotation de la barre (14), la barre (14) s'étendant à travers ladite unité d'entraînement, et l'unité d'entraînement déplaçant longitudinalement et/ou faisant tourner la barre (14) en fonction de la commande, **caractérisé en ce que** l'unité d'entraînement (20) comprend un premier entraînement à vis (24) qui, dans le cas d'une rotation autour de l'axe de cylindre (34) de la barre (14) dans une première direction, déplace la barre (14) longitudinalement dans une première direction, et dans le cas d'une rotation autour de l'axe de cylindre (34) de la barre (14) dans une deuxième direction de rotation opposée, déplace la barre (14) longitudinalement dans une deuxième direction opposée, **en ce que** l'unité d'entraînement (20) comprend un deuxième entraînement à vis (25) qui, dans le cas d'une rotation autour de l'axe de cylindre (34) de la barre (14) dans la première direction de rotation, déplace la barre (14) longitudinalement dans la deuxième direction, et dans le cas d'une rotation autour de l'axe de cylindre (34) de la barre (14) dans la deuxième direction de rotation, déplace la barre (14) longitudinalement dans la première direction, et **en ce que** les deux entraînements à vis (24, 25) sont raccordés à une commande commune (18).

2. Dispositif de balayage selon la revendication 1, **caractérisé en ce que** les entraînements à vis (24, 25) présentent à chaque fois une bague de palier (24a, 25a) entourant concentriquement la barre (14), laquelle est montée à rotation autour de l'axe de cylindre (34) dans un boîtier commun (21), et **en ce que** dans chacune des bagues de palier (24a, 25a) sont montés à rotation une pluralité de rouleaux de friction (32, 33 ; 32a-c) autour de la barre (14), de manière répartie uniformément à la manière de roues planétaires, de telle sorte qu'ils roulent avec un engagement par friction sur la surface extérieure de la barre (14), **en ce que** les axes de rotation des rouleaux de friction d'une bague de palier sont basculés à chaque fois du même angle par rapport à l'axe de cylindre (34), et **en ce que** les axes de rotation des rouleaux de friction des deux bagues de palier (24a, 25a) sont basculés soit dans la même direction soit dans la direction opposée.

3. Dispositif de balayage selon la revendication 2, **caractérisé en ce que** la barre (14) est guidée dans le boîtier (21) dans la direction axiale.

4. Dispositif de balayage selon la revendication 3, **caractérisé en ce que** des moyens (37) sont prévus sur le boîtier (21) pour fixer le dispositif de balayage (36) sur le corps ou le boulon (10) à examiner.

5. Dispositif de balayage selon la revendication 4, **caractérisé en ce que** les moyens de fixation comprennent une bride (37) adaptée au corps ou au boulon (10).

6. Dispositif de balayage selon l'une quelconque des revendications 1 à 5, **caractérisé en ce que** chacun des entraînements à vis (24, 25) présente un entraînement propre commandable (30, 31).

7. Dispositif de balayage selon l'une quelconque des revendications 1 à 6, **caractérisé en ce que** la sonde (15) est conçue pour examiner sans destruction le corps ou le boulon (10) au moyen d'ultrasons, et est raccordée à une unité de mesure correspondante (19).

8. Dispositif de balayage selon l'une quelconque des revendications 1 à 7, **caractérisé en ce que** la sonde (15) est fixée directement à une extrémité de la barre (14).

9. Dispositif de balayage selon l'une quelconque des revendications 1 à 8, **caractérisé en ce que** des moyens (35) sont prévus pour déterminer la position de la barre (14) par rapport à l'unité d'entraînement (20).
